# EUROPÄISCHE PATENTANMELDUNG

(11) **EP 0 856 695 A1**
(43) Veröffentlichungstag der Anmeldung: **05.08.1998**
(21) Anmeldenummer: 97120990.3
(22) Anmeldetag: 28.11.1997
(51) Int. Cl.: F16L 3/10

(54) **Rohrschelle**

(30) Priorität: 01.02.1997 DE 29701767 U
(71) Anmelder: fischerwerke Artur Fischer GmbH & Co. KG, D-72178 Waldachtal (DE)
(72) Erfinder: Thomma, Leonhard, 72108 Rottenburg (DE)

(57) **Zusammenfassung**

Die Erfindung betrifft eine Rohrschelle (10) mit einem eine gummielastische Einlage (22) auf seiner Innenseite aufweisenden Schellenring, der ein in die Rohrschelle (10) eingelegtes Rohr umgreift und der eine Öffnung (16) zum Einlegen des Rohres an einer Stelle seines Umfangs aufweist, wobei der Schellenring zwei in etwa radial nach außen stehende Spannflansche (26, 28) beiderseits der Öffnung (16) aufweist, die mit einer sie durchgreifenden Spannschraube (30) zusammenspannbar sind. Einer der beiden Spannflansche weist einen einseitig offenen Schlitz (32) und der andere Spannflansch (28) ein Durchsteckloch (36) auf, das von der Spannschraube (30) durchgriffen wird. Die Spannschraube (30) ist in einem Gewindeelement (42) eingeschraubt, das schwenkbar auf dem Spannflansch (28) angebracht ist. Zur Vereinfachung des Aufbaus der Rohrschelle (10) wird vorgeschlagen, daß die gummielastische Einlage (22) an ihrem dem anderen Spannflansch (28) zugewandten Ende (46) den Schellenring (12, 14) umgreift, auf einer Außenseite des Schellenrings (12, 14) auf dem Gewindeelement (42) aufliegt und dieses elastisch in Anlage an den anderen Spannflansch (28) drückt. Durch diese Gestaltung wird erreicht, daß auf ein zusätzliches Spannband oder ein Federelement zum Andrücken des Gewindeelements an den anderen Spannflansch verzichtet werden kann.

## Beschreibung

Die Erfindung betrifft eine Rohrschelle mit den Merkmalen des Oberbegriffs des Anspruchs 1.

Derartige Rohrschellen dienen zum Befestigen von beispielsweise Wasserrohren an einer Wand oder Decke. Sie weisen einen ein eingelegtes Rohr umschließenden Schellenring auf. Dieser kann einstückig sein und sich zum Einlegen des Rohres elastisch und/oder plastisch aufweiten lassen. Auch kann der Schellenring zwei- oder mehrstückig aus Schellenbügeln zusammengesetzt sein, die an einer Stelle des Umfangs des Schellenrings gelenkig miteinander verbunden sind. Mit Abstand von der gelenkigen Verbindungsstelle bzw. beim einstückigen Schellenring an einer Stelle des Umfangs weist der Schellenring eine Öffnung zum Einlegen des Rohres auf, die mit einer Spannschraube verschließbar ist, mit der sich das Rohr in der Rohrschelle festspannen läßt.

Aus der DE 43 27 859 C1 ist eine solche Rohrschelle bekannt, deren Schellenring zur Vereinfachung der Befestigung des Rohres zwei in etwa radial nach außen stehende Spannflansche beiderseits der Öffnung zum Einlegen des Rohres aufweist, die von der Spannschraube durchgriffen und mit der Spannschraube zusammenspannbar sind. Einer der beiden Spannflansche weist einen einseitig offenen Schlitz auf, in den die Spannschraube mit ihrer Kopfseite hineinverschwenkbar ist. Mit ihrem kopfabgewandten, ein Gewinde tragenden Schaffende ist die Spannschraube in ein Gewindeelement eingeschraubt, das schwenkbar auf einer dem einen Spannflansch abgewandten Seite des anderen Spannflansches angebracht ist. Nach Einlegen des Rohres in die geöffnete Rohrschelle werden die beiden Spannflansche durch Zusammendrücken des Schellenrings in seine Öffnung verkleinernder Weise auf einander zu bewegt und die Spannschraube in den Schlitz im einen Spannflansch geschwenkt. Die Rohrschelle ist provisorisch geschlossen und hält das eingelegte Rohr. Durch Anziehen der Spannschraube wird die Rohrschelle festgespannt. Der andere Spannflansch ist mit einem Loch versehen, dessen Abmessung in Schwenkrichtung der Spannschraube so groß ist, daß er das Verschwenken der Spannschraube zuläßt. Das Gewindeelement kann beispielsweise ein Blech mit einer Gewindebohrung oder eine schwenkbar am anderen Spannflansch angebrachte Mutter sein.

Um das Schließen der Rohrschelle zu vereinfachen, ist in der genannten Druckschritt ein Spannband, beispielsweise ein Gummiring, vorgesehen, der das Gewindeelement und den anderen Spannflansch umschließt und auf diese Weise das Gewindeelement elastisch in Anlage an die dem einen Spannflansch abgewandte Seite des anderen Spannflansches drückt. Werden die beiden Spannflansche zum Schließen der Rohrschelle auf einander zu bewegt, drückt der eine Spannflansch den Kopf der Spannschraube nach außen oder auch zur Seite in Richtung des offenen Endes des Schlitzes, d.h. die Spannschraube und das Gewindeelement werden verschwenkt. Sobald der Kopf der Spannschraube den einen Spannflansch überwunden hat, drückt das Spannband das Gewindeelement wieder gegen den anderen Spannflansch und verschwenkt dadurch das Gewindeelement und die Spannschraube so, daß die Spannschraube in den Schlitz schwenkt und den einen Spannflansch durchgreift. Die bekannte Rohrschelle wird also ausschließlich durch Zusammendrücken ihres Schellenrings provisorisch geschlossen, wobei das Spannband dafür sorgt, daß die Spannschraube in jeder räumlichen Lage der Rohrschelle von selbst in den einseitig offenen Schlitz im einen Spannflansch hineinverschwenkt.

Aufgabe der Erfindung ist es, eine derartige Rohrschelle zu vereinfachen.

Diese Aufgabe wird erfindungsgemäß durch die Merkmale des Anspruchs 1 gelöst. Die erfindungsgemäße Rohrschelle weist eine gummielastische Einlage auf, die auf einer Innenseite ihres Schellenrings angebracht ist und einen unmittelbaren Kontakt des eingelegten Rohres mit der üblicherweise als Blechstanz- und Biegeteil hergestellten Rohrschelle verhindert. Die gummielastische Einlage reicht zumindest bis zu dem anderen Spannflansch heran und umgreift den Schellenring zumindest an dem dem anderen Spannflansch zugewandten Ende. Die Einlage liegt auf einer dem einen Spannflansch abgewandten Außenseite des Gewindeelements auf und drückt das Gewindeelement aufgrund ihrer Elastizität federnd gegen die dem einen Spannflansch abgewandte Seite des anderen Spannflansches. Die erfindungsgemäße Rohrschelle hat den Vorteil, daß ein Spannband oder ein sonstiges Federelement zum Andrücken des Gewindeelements an den anderen Spannflansch nicht notwendig ist. Dessen Funktion wird von der ohnehin vorhandenen gummielastischen Einlage übernommen. Die erfindungsgemäße Rohrschelle weist also ein Bauteil weniger auf. Weiterer Vorteil ist, daß damit der zusätzliche Arbeitsschritt des Anbringens des Spannbandes oder sonstigen Federelements entfällt, was das Zusammensetzen der erfindungsgemäßen Rohrschelle vereinfacht.

In bevorzugter Ausgestaltung weist die gummielastische Einlage im Querschnitt C-förmige Seitenränder zur Befestigung am Schellenring auf, die Seitenränder des Schellenrings umgreifen. Mit diesen C-förmigen Seitenrändern liegt die Einlage mit ihrem am anderen Spannflansch befindlichen Ende auf der Außenseite des Gewindeelements auf und drückt dieses in Anlage an den anderen Spannflansch. Dies hat den Vorteil, daß auf Länge abgeschnittene Meterware als Einlage verwendet werden kann.

Der Schlitz im einen Spannflansch verläuft vorzugsweise in radialer Richtung und ist an seinem radial äußeren Ende offen. Die Schwenkachse des Gewindeelements verläuft dementsprechend quer zur Richtung des Schlitzes parallel zu einer gedachten Mittelachse der Rohrschelle, also parallel zu einem in die Rohrschelle eingelegten Rohr. Die Schwenkachse des Gewindeelements ist im Bereich eines Übergangs vom einen Spannflansch in den Schellenring vorgesehen.

Um das Verschwenken der Spannschraube beim Schließen der Rohrschelle zu unterstützen, weist der eine Spannflansch bei einer Ausgestaltung der Erfindung einen Abweiser auf, der schräg oder geschwungen radial nach außen vom anderen Spannflansch weg verläuft. Mit diesem Abweiser drückt der eine Spannflansch beim Schließen des Schellenrings den Schraubenkopf radial nach außen und verschwenkt dadurch die Spannschraube gegen die Federkraft der gummielastischen Einlage, bis der Schraubenkopf den einen Spannflansch überwunden hat und durch die Federkraft der Einlage in den Schlitz des einen Spannflansches hineinverschwenkt wird.

Vorzugsweise ist der Schellenring der erfindungsgemäßen Rohrschelle zweistückig mit zwei gelenkig miteinander verbundenen Schellenbügeln ausgebildet. Er weist ein Befestigungselement, beispielsweise eine am Schellenring angeschweißte Mutter oder einen Gewindebolzen, zum Anbringen an einer Wand, Decke oder dgl. auf.

Die Erfindung wird nachfolgend anhand eines in der Zeichnung dargestellten Ausführungsbeispiels näher erläutert. Es zeigen:
- Figur 1: eine erfindungsgemäße Rohrschelle in Seitenansicht;
- Figur 2: einen Querschnitt einer gummielastischen Einlage der in Figur 1 dargestellten Rohrschelle; und
- Figur 3: eine vergrößerte Darstellung einer Einzelheit gemäß Pfeil III in Figur 1 in Schnittdarstellung.

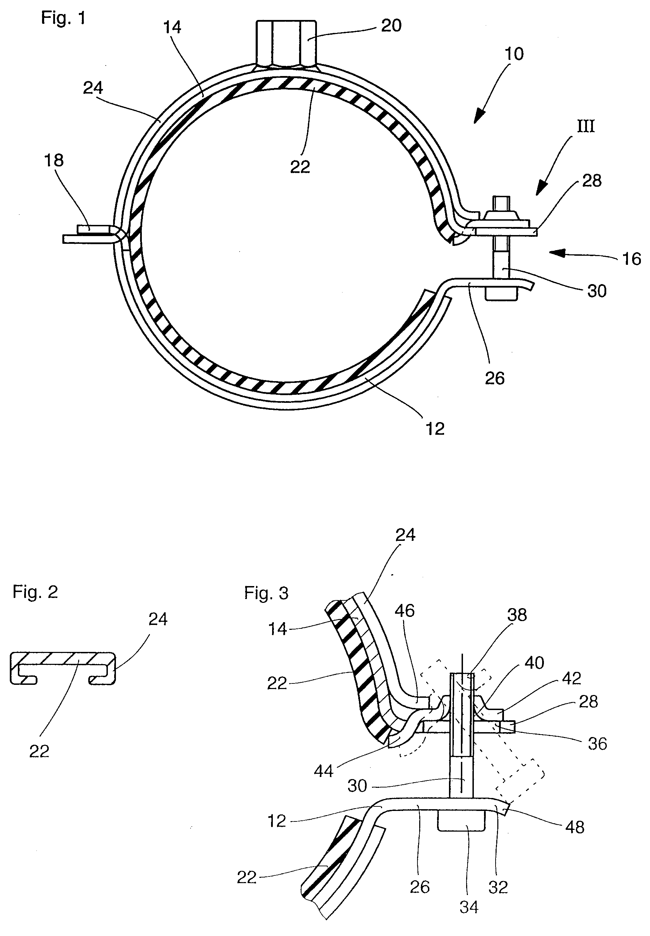

Die in Figur 1 dargestellte, erfindungsgemäße Rohrschelle 10 weist einen Schellenring mit einem ersten Schellenbügel 12 und einem zweiten Schellenbügel 14 auf, die beide jeweils etwas weniger als einen Halbkreisbogen bilden. An einer Stelle ihres Umfangs weist die Rohrschelle 10 eine Öffnung 16 zum Einlegen eines nicht dargestellten Rohres auf. Der Öffnung 16 gegenüber sind die beiden Schellenbügel 12, 14 gelenkig miteinander verbunden, um die Rohrschelle 10 öffnen und das Rohr einlegen zu können. Zur gelenkigen Verbindung weist der erste Schellenbügel 12 eine in Draufsicht T-förmige Zunge 18 auf, die in ansich bekannter Weise eine in der Zeichnung nicht sichtbare Ausstanzung des zweiten Schellenbügels 14 durchgreift.

Beide Schellenbügel 12, 14 sind Blechstanz- und Biegeteile. Etwa in der Mitte des Halbkreisbogens den der zweite Schellenbügel 14 bildet ist eine Mutter 20 zur Befestigung der Rohrschelle 10 an einer Decke oder einer Wand angeschweißt. Auf einer Innenseite der Rohrschelle 10 ist eine gummielastische Einlage 22 angebracht, die sich durchgehend über beide Schellenbügel 12, 14 erstreckt. Zu ihrer Befestigung an der erfindungsgemäßen Rohrschelle 10 weist die in Figur 2 im Querschnitt dargestellte Einlage 22 C-förmige Seitenränder 24 auf, die Seitenränder der den Schellenring bildenden Schellenbügel 12, 14 umgreifen. Der klaren Darstellung wegen ist in Figur 1 der dem Betrachter zugewandte C-förmige Seitenrand 24 der Einlage 22 weggeschnitten.

Beiderseits der Öffnung 16 zum Einlegen eines Rohres weisen die Schellenbügel 12, 14 mit ihnen einstückige Spannflansche 26, 28 auf, die in etwa radial nach außen und näherungsweise parallel zueinander von der Rohrschelle 10 abstehen und von einer Spannschraube 30 durchgriffen werden (Fig. 3). Mit ihrem kopfseitigen Schaftende durchgreift die Spannschraube 30 einen Schlitz 32, der radial verlaufend und außen offen in dem einen Spannflansch 26 angebracht ist, der mit dem ersten Schellenbügel 12 einstückig ist. Ein Kopf 34 der Spannschraube 30 liegt auf einer dem anderen Spannflansch 28 abgewandten Seite des einen Spannflanschs 26 auf.

Ein dem Kopf 34 abgewandtes, ein Gewinde tragendes Schaftende 38 der Spannschraube 30 ragt durch ein Langloch 36 hindurch, das radial verlaufend im anderen Spannflansch 28 angebracht ist, der mit dem zweiten Schellenbügel 14 einstückig ist. Das gewindetragende Schaftende 38 ist lose in ein Innengewinde eingeschraubt, das in einem Kragen 40 eines Gewindeblechs 42 angebracht ist. Das Gewindeblech 42 bildet ein Gewindeelement, es ist auf einer dem einen Spannflansch 26 abgewandten Seite des anderen Spannflanschs 28 angeordnet. Das Gewindeblech 42 ist schwenkbar im Bereich eines Übergangs vom anderen Spannflansch 28 in den zweiten Schellenbügel 14 angebracht. Dazu weist das Gewindeblech 42 eine mit ihm einstückige, gekröpfte Zunge 44 auf, die das Langloch 36 an dessen radial innerem Ende durchgreift, welches sich im Bereich des Übergangs des anderen Spannflanschs 28 in den zweiten Schellenbügel 14 befindet. Durch Verschwenken läßt sich das Gewindeblech 42 in die in Figur 3 mit Strichlinien dargestellte Lage vom anderen Spannflansch 28 abheben. Die Enden 44 der C-förmigen Ränder 24 der gummielastischen Einlage 22 stoßen auf einer dem einen Spannflansch 26 abgewandten Außenseite gegen das Gewindeblech 42 bzw. liegen auf dessen Außenseite auf. Sie bilden Federelemente, die das Gewindeblech 42 in Anlage an die dem einen Spannflansch 26 abgewandte Seite des anderen Spannflansches 28 drücken.

Zur Befestigung eines nicht dargestellten Rohres an einer Wand oder Decke wird die erfindungsgemäße Rohrschelle 10 mittels ihrer Mutter 20 an der Wand oder Decke befestigt. Die Rohrschelle 10 ist zunächst geöffnet, d.h. der Kopf 34 der Spannschraube 30 befindet sich auf einer dem anderen Spannflansch 36 zugewandten Seite des einen Spannflansches 26, die Spannschraube 30 durchgreift den mit dem einseitig offenen Schlitz 32 versehenen einen Spannflansch 26 nicht. Die Schellenbügel 12, 14 lassen sich zum Einlegen des Rohres auseinanderschwenken. Nach Einlegen des Rohres werden die beiden Schellenbügel 12, 14 zusammengedrückt. Dabei nähern sich die Spannflansche 26, 28 einander, der Kopf 34 der Spannschraube 30 stößt gegen den einen Spannflansch 26. Dieser Spannflansch 26, der infolge der gegeneinander verschwenkten Schellenbügel 12, 14 in einem sich radial nach außen öffnenden Winkel zum anderen Spannflansch 28 steht, drückt den Kopf 34 radial nach außen und verschwenkt dadurch die Spannschraube 30 radial nach außen (Strichlinien in Figur 3).

Um das Verschwenken der Spannschraube 30 zu erleichtern, ist ein radial äußeres Ende des einen Spannflansches 26 als Abweiser 48 schräg vom anderen Spannflansch 28 weggebogen. Zusammen mit der Spannschraube 30 verschwenkt das Gewindeblech 42, das schwenkbar am zweiten Schellenbügel 14 angebracht ist. Dabei bietet das Langloch 36 dem anderen Spannflansch 28 ausreichend Freiraum für die Schwenkbewegung der Spannschraube 30. Sobald der Kopf 34 das äußere Ende des einen Spannflansches 26 überwunden hat, drücken die Enden 46 der C-förmigen Ränder 24 der gummielastischen Einlage 22 das Gewindeblech 42 in Anlage an den anderen Spannflansch 28, die Spannschraube 30 wird in den außen offenen Schlitz 32 im einen Spannflansch 26 hineingedrückt, so daß der Kopf 34 der Spannschraube 30 diesen Spannflansch 26 übergreift, wie in Figuren 1 und 3 dargestellt. Die erfindungsgemäße Rohrschelle 10 ist dadurch provisorisch geschlossen, sie hält das in sie eingelegte Rohr. Durch Anziehen der Spannschraube 30 wird das Rohr in der Rohrschelle 10 festgespannt. Die erfindungsgemäße Rohrschelle 10 läßt sich ohne Werkzeug provisorisch schließen. Dazu werden lediglich die beiden Schellenbügel 12, 14 gegeneinandergedrückt, die gummielastische Einlage 22, die mit den Enden 46 ihrer C-förmigen Seitenränder 24 auf die Außenseite des Gewindeblechs 42 drückt, sorgt in jeder Lage der Rohrschelle 10 dafür, daß die Spannschraube 30 in den einseitig offenen Schlitz 32 im einen Spannflansch 26 verschwenkt, sobald der Kopf 34 der Spannschraube 30 das äußere Ende dieses Spannflansches 26 überwunden hat.

## Patentansprüche

1. Rohrschelle mit einem eine gummielastische Einlage auf seiner Innenseite aufweisenden Schellenring, der ein in die Rohrschelle eingelegtes Rohr umgreift und der eine Öffnung zum Einlegen des Rohres an einer Stelle seines Umfangs aufweist, wobei der Schellenring zwei in etwa radial nach außen stehende Spannflansche beiderseits der Öffnung aufweist, die mit einer sie durchgreifenden Spannschraube zusammenspannbar sind, wobei einer der beiden Spannflansche, der sich auf der Seite eines Kopfes der Spannschraube befindet, einen einseitig offenen Schlitz und der andere Spannflansch ein Durchsteckloch aufweist, das von einem gewindetragenden Schaftende der Spannschraube durchgriffen wird und das in Richtung parallel zum einseitig offenen Schlitz eine Abmessung aufweist, die ein Verschwenken der Spannschraube aus dem Schlitz heraus und in den Schlitz hinein ermöglicht, und mit einem Gewindeelement, in das die Spannschraube eingeschraubt ist und das schwenkbar auf einer dem einen Spannflansch abgewandten Seite des anderen Spannflansches angebracht ist, **dadurch gekennzeichnet**, daß die gummieelastische (22) Einlage an ihrem dem anderen Spannflansch (28) zugewandten Ende (46) den Schellenring (12, 14) umgreift, auf einer Außenseite des Schellenrings (12, 14) auf dem Gewindeelement (42) aufliegt und dieses elastisch in Anlage an den anderen Spannflansch (28) drückt.

2. Rohrschelle nach Anspruch 1, **dadurch gekennzeichnet**, daß die Einlage (22) C-förmige Seitenränder (24) aufweist, mit der sie Seitenränder des Schellenrings (12, 14) umgreift und mit denen sie auf der Außenseite des Gewindeelements (42) aufliegt und dieses elastisch in Anlage an den anderen Spannflansch (28) drückt.

3. Rohrschelle nach Anspruch 1, **dadurch gekennzeichnet**, daß der einseitig offene Schlitz (32) in etwa in radialer Richtung verläuft und an einem radial äußeren Ende offen ist.

4. Rohrschelle nach Anspruch 1, **dadurch gekennzeichnet**, daß das Gewindeelement (42) um eine zu einer Mittelachse der Rohrschelle (10) parallele Schwenkachse, die sich in einem Übergangsbereich vom Schellenring (12, 14) zum anderen Spannflansch (28) befindet, schwenkbar ist.

5. Rohrschelle nach Anspruch 1, **dadurch gekennzeichnet**, daß der eine Spannflansch (26) einen Abweiser (48) aufweist, der vom anderen Spannflansch (28) weg verläuft, gegen den der Kopf (34) der Spannschraube (30) gelangt, wenn die beiden Spannflansche (26, 28) zum Schließen der geöffneten Rohrschelle (10) zusammengedrückt werden und der den Kopf (34) in Richtung des offenen Endes des Schlitzes (32) im einen Spannflansch (26) drückt.

6. Rohrschelle nach Anspruch 1, **dadurch gekennzeichnet**, daß der Schellenring zwei Schellenbügel (12, 14) aufweist, die gelenkig miteinander verbunden sind.

7. Rohrschelle nach Anspruch 1, **dadurch gekennzeichnet**, daß der Schellenring (12, 14) eine Befestigungseinrichtung (20) zum Anbringen an einer Wand, Decke oder dgl. aufweist.
